(19) Europäisches Patentamt
European Patent Office
Office européen des brevets

(11) **EP 3 131 822 B2**

(12) **NEW EUROPEAN PATENT SPECIFICATION**
After opposition procedure

(45) Date of publication and mention
of the opposition decision:
**06.09.2023   Bulletin 2023/36**

(45) Mention of the grant of the patent:
**26.02.2020   Bulletin 2020/09**

(21) Application number: **15719369.9**

(22) Date of filing: **15.04.2015**

(51) International Patent Classification (IPC):
*B29C 49/06* (2006.01)     *B29C 49/08* (2006.01)
*B29K 67/00* (2006.01)     *B29K 105/26* (2006.01)
*B29L 31/00* (2006.01)     *B65B 3/02* (2006.01)
*B65D 8/00* (2006.01)     *B65D 6/00* (2006.01)
*B65D 47/06* (2006.01)     *B65D 1/02* (2006.01)

(52) Cooperative Patent Classification (CPC):
**B65D 1/0207; B29C 49/08; B65D 1/0246;**
B29C 49/06; B29C 2949/0715; B29K 2067/003;
B29K 2105/26; B29L 2031/712; B29L 2031/717;
B65B 3/022

(86) International application number:
**PCT/US2015/025897**

(87) International publication number:
**WO 2015/160902 (22.10.2015 Gazette 2015/42)**

## (54) MOLDED ARTICLE FORMED FROM POST CONSUMER RECYCLED MATERIAL

AUS RECYCELTEM ALTMATERIAL GEFORMTE FORMARTIKEL

ARTICLE MOULÉ CONSTITUÉ DE MATÉRIAU RECYCLÉ POST-CONSOMMATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **17.04.2014   US 201414255916**

(43) Date of publication of application:
**22.02.2017   Bulletin 2017/08**

(73) Proprietor: **S.C. Johnson & Son, Inc.
Racine, WI 53403 (US)**

(72) Inventors:
• **HIGAREDA, Jose De Jusus, Castillo
Racine, WI 53406 (US)**
• **BARRON, Bradley, J.
Evanston, IL 60201 (US)**
• **GOLA, Christina, L.
Sturtevant, WI 53177 (US)**

(74) Representative: **Murgitroyd & Company
Murgitroyd House
165-169 Scotland Street
Glasgow G5 8PL (GB)**

(56) References cited:
WO-A1-98/29314         WO-A1-2005/121230
WO-A1-2005/121230     WO-A1-2012/024413
WO-A1-2012/065162     WO-A1-2012/102778
AU-A1- 2012 258 398     JP-A- 2000 219 728
US-A1- 2005 150 859     US-A1- 2012 175 338
US-A1- 2012 199 515

• **"Peninsula Plastics Recycling Specifications for
Crystalline Pelletized RPET Resin 100%
Post-Consumer PET", , 1 January 2010
(2010-01-01), XP055202169, Retrieved from the
Internet:
URL:http://peninsularecycling.com/download
s/PPR RPET pellet spec.pdf [retrieved on
2015-07-14]**

EP 3 131 822 B2

**Description**

CROSS-REFERENCE TO RELATED APPLICATIONS

Not applicable.

STATEMENT REGARDING FEDERALLY SPONSORED RESEARCH

Not applicable.

BACKGROUND OF THE INVENTION

The disclosure relates, in general, to a molded article and, more particularly, to an article such as a container for a composition, where the container is formed from a post-consumer recycled material.

Users of consumer products will typically purchase a composition in order to accomplish a particular task. For example, a user may purchase a cleaning composition to clean a kitchen countertop or sanitize a bathroom surface. Alternatively, a user may purchase an air freshening composition for use in a home or a vehicle. In still another example, a user may purchase a pest control composition in order to eliminate a pest in an indoor or outdoor location. Oftentimes, these compositions are sold in a container which serves a variety of purposes. Accordingly, it may be useful to provide a container having one or more particular physical or chemical characteristics. However, achieving a container or other molded article for storing or dispensing a composition may be challenging depending on the criteria that may need to be met.

In one example, the container may require certain dimensions (i.e., a certain size or shape) in order to contain a certain amount of a composition, occupy a given amount of shelf space at a retail location, or possess certain ergonomic characteristics, such as a handle for portability or a neck shaped to accommodate a left-hand or right-hand grip. The dimensions of the container for the consumer product may also be sized or shaped to convey a message with a label or the like. Moreover, the dimensions may contribute to the structural integrity of the container. Structural characteristics, including but not limited to the dimensions of the container, may also be important to the ability to ship large quantities of the consumer product from a manufacturing facility to a warehouse or retail store, or other locations.

The method of transportation may also play a role in determining what physical and structural properties a consumer product container may have. For example, a container that will be stacked on a pallet may be designed with a given top load strength in order to withstand being crushed. In another aspect, a container may be designed to withstand a fall or drop. In yet another aspect a container for a consumer product may be designed to retain a solid, liquid or gas such that a composition does not permeate through or otherwise escape from the container at elevated or reduced pressures (e.g., air travel). In still another aspect, a container may be designed to withstand hot or cold temperatures.

The chemical aspects of a container for a consumer product may also be designed to meet certain criteria. For example, a composition may be a volatile composition or may be reactive in the presence of certain materials. Furthermore, the composition may be a solvent that is capable of dissolving certain materials or may be generally incompatible with one or more materials. The color and clarity of a container may also be useful criteria to control. For example, it may be useful to provide a transparent container in order to readily convey the contents of the material to the consumer. In other cases, it may be useful to provide a translucent or opaque container if a composition is sensitive to light, for example. Furthermore, the color of the container may be used to convey information about the product or differentiate the product from another of similar or dissimilar composition.

In yet another aspect, once a composition has been spent or it no longer serves a purpose, a user may not desire to retain the container. In this case, the user may wish to dispose of the product. Given the accessibility of recycling programs to users, and the desire of many users to be conscious of which materials can be reused instead of being disposed of in landfills, it may be useful to provide a container that may be recycled. Moreover, recycled consumer product containers may be reclaimed as post-consumer waste and reused in order to make new containers. One challenge associated with the utility of post-consumer waste is that there may be an extensive infrastructure relied upon to collect, sort, clean and process all of the collected materials which can be an economically challenging task.

In another aspect, while the recovered post-consumer waste may be generally purified to provide a single type of recycled material, the material may include contaminants depending on the quality of the recycling process. These contaminants might complicate the manufacturing process resulting in a more expensive product. At the same time the contaminants, or the manufacturing process required to utilize post-consumer waste containing the contaminants, could negatively impact the physical and chemical properties of the consumer product container.

Given the variety of compositions sold to consumers, it may be challenging to provide a container which will protect and contain a composition during the manufacturing process, during shipping and storage, and when handled or operated by a user. Moreover, it may be additionally challenging to provide a container with a specific color, clarity, or shape.

One class of materials that has been successfully employed in the past to address the aforementioned challenges includes polymers such as polypropylene, polyethylene, polystyrene and polyethylene terephthalate (PET). However, the particular polymer or process used to prepare the polymer may affect one or more of the physical and chemical characteristics of a container formed therefrom. In one example, a container may be formed from a single polymer, a copolymer, or a blend of multiple polymers. Furthermore, the polymer materials may be newly prepared (i.e., virgin) or recycled from materials collected from post-consumer or post-industrial waste. In each case, the nature of the material may impart distinct physical and chemical characteristics to the molded product.

In one particular example, virgin PET has been suitably used in the past to prepare containers and other molded articles. Virgin PET pellets or flakes may be melted and injection molded or extruded to prepare a preform or parison. The preform or parison may then be blow molded, for example, to provide a molded article such as a container, bottle or the like. Virgin PET may have a particular set of useful properties including a high intrinsic viscosity, storage modulus, tensile strength, color and clarity. However, efforts to rely less upon newly formed materials along with the desire to reuse materials such as post-consumer recycled materials has led to various types of containers containing at least a portion of a recycled material.

One challenge that may arise when incorporating recycled material into an article is that the properties of the recycled material may be diminished as compared with a virgin material. For example, the process of recycling PET may lead to degradation of the material or the incorporation of one or more contaminants into the material. As a result, the recycled PET may have diminished properties including reduced intrinsic viscosity, tensile strength, or storage modulus, for example. In another aspect, the color or clarity of the PET may be affected with impurities potentially resulting in a yellow or grey color or the appearance of dark specks in the material. Impurities may not only result in discoloration, but may form a weaker molded article as well. Accordingly, only a small portion of a recycled bottle may be incorporated into a new one. Furthermore, each generation of (recycled) bottles accumulates additional impurities, thereby potentially resulting in a limited lifetime for recycled PET if the impurities cannot be tolerated.

In order to overcome some of these challenges, containers may be prepared by blending a recycled material with virgin material in order to provide a material with suitable overall properties. AU 2012258398 A1 discloses articles manufactured from blends of polymers including, polylactic acid and 50 % virgin PET/50% recycled PET. WO2012/102778 A1 discloses several compositions for a sustainable article substantially free of virgin petroleum-based compounds that includes a container, a cap, and a label, each made from renewable and/or recycled materials, including recycled PET. Alternatively, it may be possible to treat the recycled material using one or more chemical or physical transformations to improve the properties of the recycled material. For example, recycled PET may be treated to extend the chain-length of the polymer chains. In yet another aspect, the recycled material may be obtained from certain specific sources which may have relatively improved properties compared with other sources. For example, post-industrial recycled PET may have fewer impurities and more desirable properties as compared with post-consumer recycled PET. In general, the incorporation of unmodified, recycled material into a molded article presents a number of challenges. More specifically, the preparation of a molded article formed entirely from recycled materials such as 100% post-consumer recycled PET is particularly challenging.

Currently, there exist a number of molded articles that are prepared from recycled PET. For example, EartH$_2$O®, a U. S. based bottled water supplier, forms drinking water bottles from 100% recycled PET. In one aspect, the precursor material (i.e., recycled PET flake) must be systematically cleansed to eliminate contaminants. In another aspect, the 100% recycled PET bottles have a yellow-grey tint that affects the appearance of the contents of the recycled bottles. Accordingly, a colorant is necessarily added to disguise the off-color nature of the bottle. In a further aspect, lower grade PET may be used to form drinking water bottles, whereas higher grade PET may be required to produce a broader range of molded articles. Naya Waters Inc. and Glas Water® similarly provide drinking water bottles made with 100% post-consumer recycled PET.

Recycled PET has also been used to provide decontaminated, food-grade molded articles. In one example, the BePET™ system is a recycling and decontamination process used to create PET flakes from recycled bottles. One process step includes integrated decontamination and solid state polymerization of the PET flakes. Solid state polymerization may be required to improve the material properties of the PET before it can be used to form recycled containers or other molded articles. Decontamination may also be required in order for the PET flakes to be formed into articles that may come into contact with food or other consumable mediums. In another aspect, in order to produce high quality packaging, the treated recycled PET may need to be blended with up to 30% virgin PET.

In another example of food-grade recycled PET articles, UK company Invicta Group has developed two processes known as "rPETable" and "rNEWable," which the company describes as processes for preparing rigid, food-safe 100% recycled PET articles such as tumblers (i.e., cups). However, there is no indication that the process is applicable to the preparation of semi- or non-rigid articles. Even more importantly, there is no indication that the chemical and physical properties of the processed materials overcome any of the disadvantages noted above with respect to recycled PET articles as compared with articles formed from virgin PET.

As evidenced by the above examples and the known attributes of molded articles prepared from 100% recycled PET, it is apparent that the successful formation of a molded article from 100% post-consumer recycled PET may require overcoming a number of challenges. In one aspect, the Naya Waters Inc. water bottle was reportedly only realized after seven years of research and development, while the Invicta Group reportedly tested hundreds of recycled materials with a trial stage requiring four years and millions of dollars in investments. Accordingly, one skilled in the art would anticipate that all of the features of a molded article formed from 100% recycled PET, such as the size, shape, thickness dimensions, chemical and material properties, and type and amount of additives combined with the 100% recycled PET, are important in the resulting performance properties of the molded article.

In summary, in the consumer product container industry, the capability to manufacture, transport, and recycle a container that meets the cost requirements, the physical and structural property requirements, and the chemical property requirements necessitated by the specific composition and resulting purpose, provides a number of challenges. Accordingly, there is a need to provide a molded article such as a container for a composition that meets specifications for a variety of physical and chemical properties. In another aspect, there is a need for a container made from a recycled material that may be comparable to a container made from virgin materials. In yet another aspect, there is a need for a molded article formed entirely from recycled materials where the recycled materials do not need to be modified or blended with virgin materials in order to achieve a given set of specifications.

SUMMARY OF THE INVENTION

The present invention overcomes the aforementioned drawbacks by providing a molded article comprising a container, such as a container for a consumer product composition, formed from 100% post-consumer recycled PET.

In accordance with the invention, the present disclosure provides a molded article according to claim 1. The molded article includes a container having a base, a sidewall connected to the base and extending therefrom, and an opening. The container consists of 100% post-consumer recycled polyethylene terephthalate, and optionally (ii) an additive selected from a toner, a colorant and a slip agent. The container has a mass to internal volume ratio of between 0.04 grams per cubic centimeter and 0.06 grams per cubic centimeter. The value of $\Delta E^*_{ab}$ is less than about 3.5 for the container with respect to a reference container having the same dimensions as the container. The reference container differs from the container of the invention only in polymer composition, wherein the polymer composition consists of 50% virgin polyethylene terephthalate and 50% post-consumer recycled polyethylene terephthalate.

The present disclosure provides a molded article including post-consumer recycled material. The molded article includes a container defining an interior space, the container having a base, a sidewall connected to the base and extending therefrom, the sidewall having a maximum thickness that can be less than about 0.6 millimeters, and in some embodiments a neck connected to the sidewall, and an opening in the neck. In one aspect, the container is devoid of virgin polyethylene terephthalate. The container consists of a polymer consisting essentially of 100% post-consumer recycled polyethylene terephthalate. The 100% post-consumer recycled polyethylene terephthalate has an intrinsic viscosity of 0.69 deciliters per gram as determined by ASTM 04603. In yet another aspect, the container has a top load strength of at least about 90% of a top load strength of a reference container having the same dimensions as the container. The reference container differs from the container of the invention only in polymer composition, wherein the polymer composition consists of 50% virgin polyethylene terephthalate and 50% post-consumer recycled polyethylene terephthalate.

In accordance with a further aspect, the present disclosure provides a blow-molded container prepared from an injection molded preform including post-consumer recycled material. The container defines an interior space and includes a barrel having a front wall, a back wall, and a pair of opposing sidewalls interconnecting the front and back walls, a base connected to a first end of the barrel, a neck connected to a second end of the barrel, the neck including a plurality of horizontal grooves, and a mouth connected to the neck. The mouth includes an opening in fluid communication with the interior space and an exterior surface for coupling to a trigger sprayer head. The container consists of 100% post-consumer recycled polyethylene terephthalate having an intrinsic viscosity of 0.69 deciliters per gram, and optionally an additive selected from a toner, a colorant and a slip agent.

The present disclosure provides a molded article including post-consumer recycled material. The article includes a container having a base, a sidewall, and at least one opening. The container consists of a polymer consisting essentially of 100% post-consumer recycled polyethylene terephthalate, and optionally (ii) an additive selected from a toner, a colorant and a slip agent. The value of $\Delta E^*_{ab}$ is less than 3.5 for the container in relation to a reference container having the same dimensions as the container. The reference container differs from the container of the invention only in polymer composition, wherein the polymer composition consists of 50% virgin polyethylene terephthalate and 50% post-consumer recycled polyethylene terephthalate.

The foregoing and other aspects and advantages of the invention will appear from the following description. In the description, reference is made to the accompanying drawings which form a part hereof, and in which there is shown by way of illustration a preferred embodiment of the invention. Such embodiment does not necessarily represent the full scope of the invention, however, and reference is made therefore to the claims and herein for interpreting the scope of the invention.

BRIEF DESCRI PTION OF THE DRAWINGS

FIG. 1 is a side elevational view of an exemplary embodiment of a container according to the present disclosure;
FIG. 2 is a front elevational view of the container of FIG. 1;
FIG. 3 is a partial side elevational view of an embodiment of a trigger sprayer head coupled to a mouth of the container of FIG. 1;
FIG. 4 is a partial front elevational view of the trigger sprayer head of FIG. 3;
FIG. 5 is a bottom plan view of the base of the container of FIG. 1; and
FIG. 6 is an enlarged partial side elevational view of the mouth of the container of FIG. 1.

Like numbers will be used to describe like parts from Figure to Figure throughout the following detailed description.

DETAILED DESCRIPTION OF THE INVENTION

The present disclosure is generally directed toward a molded article for containing a composition. For purposes of discussion herein, a particular exemplary embodiment will be expounded upon, which relates to a blow-molded container prepared from an injection molded preform. The molded article is fabricated from a polymer consisting of 100% post consumer recycled PET. Moreover, the container may be configured to couple to a trigger sprayer head to enable a user to dispense a fluid composition from within the container. However, it should be understood that the disclosed systems, regardless of whether described in connection with a particular composition or attachment, are not so bound and may be utilized with any number of liquids, fluids, gels or other compositions, both separately and in combination with one or more attachments or other peripherals. In addition, it should be understood that the container or other molded article, while described in the example embodiments as being formed by one or more particular processes from one or more materials, is not meant to be limited to those processes and materials. Hence, the molded article may be suitably made with any process, system, materials, additives, polymers or other means as known to one of ordinary skill.

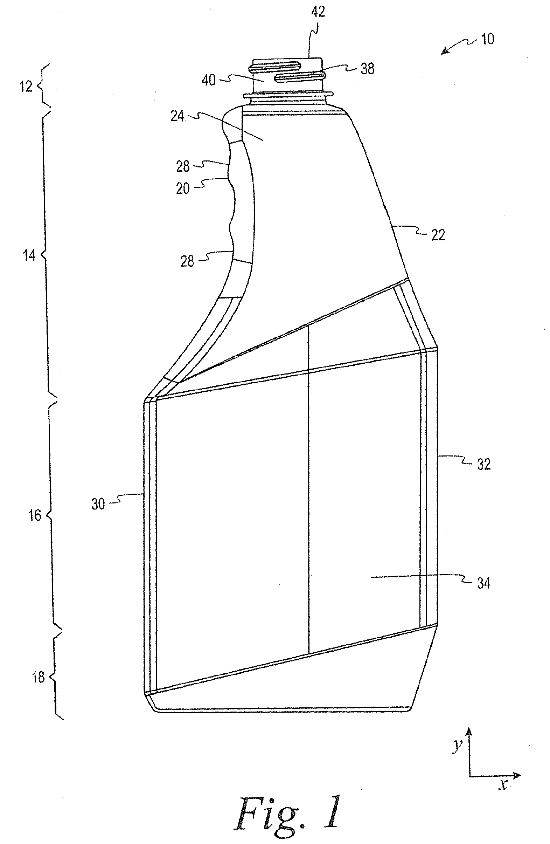

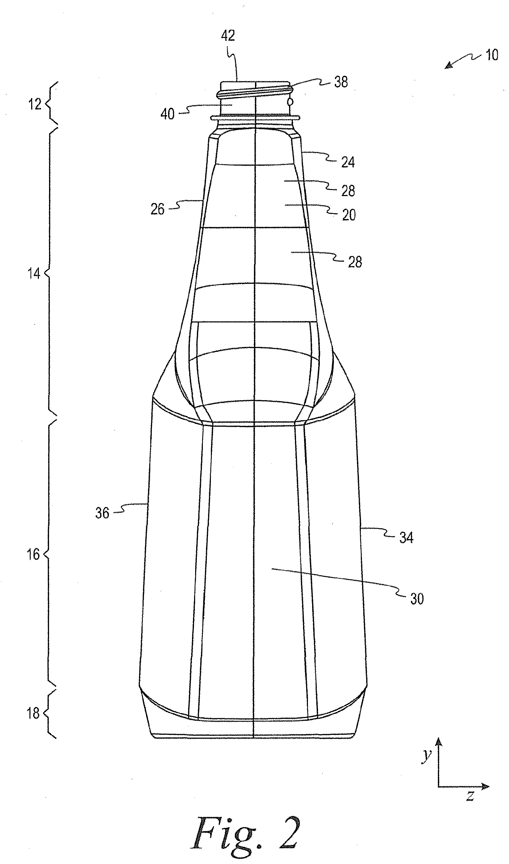

In one aspect, the articles described herein may be used as containers for a composition or other consumer product. For example, a container may be a handheld device for dispensing a composition disposed within the container itself. To this end, the container may be coupled to a trigger sprayer head to stream, spray, mist or otherwise dispense a composition such as cleaning fluid from the container in a directional or nondirectional manner. With reference to FIGS. 1 and 2, one particular embodiment of a container 10 with a relatively rectangular body profile is illustrated as including a mouth 12, a neck 14, a barrel 16, and a base 18. The neck 14 includes a front wall 20, a back wall 22, a first sidewall 24, and an opposing second sidewall 26. The first sidewall 24 and the second sidewall 26 interconnect with the front wall 20 and the back wall 22. The front wall 20 includes a plurality of horizontal grooves 28 contoured to accommodate gripping fingers of a user. The barrel 16 also includes a front wall 30, a back wall 32, a first sidewall 34 and an opposing second sidewall 36. The first sidewall 34 and the second sidewall 36 have generally rectangular side profiles and interconnect with the front wall 30 and the back wall 32.

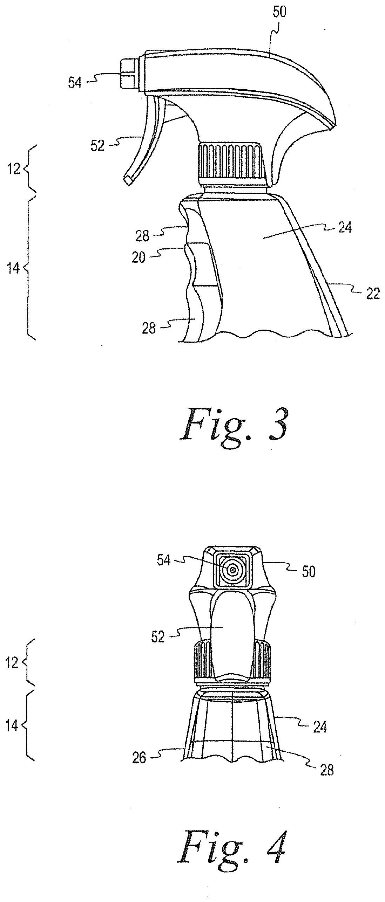

As illustrated in FIGS. 1 and 2, the mouth 12 may include surface threads 38 and an annular abutment 40 with an open upper end 42 in communication with an interior of the container 10 for complementary and reversible reception and fitment of a threaded trigger sprayer head 50. One example trigger sprayer head 50 coupled to the container 10 is shown in FIGS. 3 and 4. The trigger sprayer head 50 is generally designed to be manually actuated via pressure applied to a trigger 52. The trigger 52 may act as (or be in communication with) an actuation mechanism for discharging a flowable media through a spray orifice or nozzle 54 and may include any number of components or mechanisms to effect dispensing as would be known to one of ordinary skill in the art. In particular, during actuation, the flowable medium may travel from an interior space of the container 10, through the trigger sprayer head 50 and from the orifice 54 in a directional manner as a stream, mist or spray.

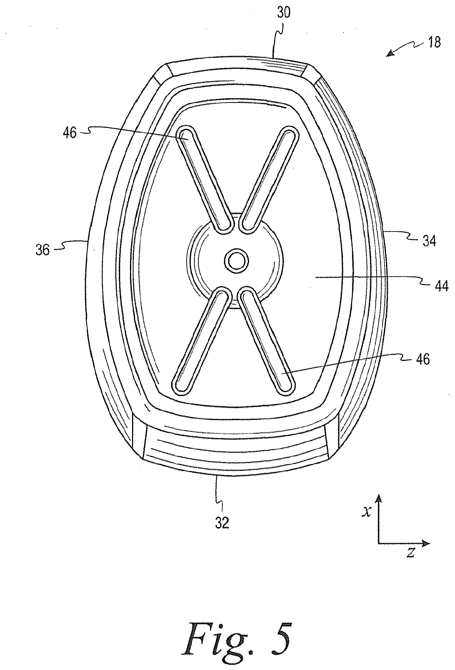

The mouth 12 is connected to a first end of the neck 14, which in turn is connected to the barrel 16, with the back wall 22 of the neck 14 transitioning into the back wall 32 of the barrel 16. The barrel 16 generally tapers inwardly toward, and transitions into, the base 18, which is capable of supporting the container in an upright fashion as generally shown in FIGS. 1 and 2. The base 18 may have a concave exterior surface and a generally rounded perimeter as shown in FIG. 5. The base 18 further includes a bottom wall 44 and a sidewall 48 upwardly extending from the bottom wall 44 and merging into the barrel 16 to complete the overall rectangular profile of the container 10. In some embodiments, the sidewall 48 may have a smooth continuous surface. In other embodiments the sidewall 48 may include sections interconnected by more abrupt transitions that form edges. As illustrated in FIG. 5, the bottom wall 44 may be concaved and may include a plurality of radially extending ribs 46 to enhance the base strength of the container 10.

In general, the example container 10 is designed with a shape, dimensions and overall construction that may contribute to the physical characteristics of the container. 10 such as top loading strength, impact resistance, balance and the like. However, it should be noted that while the example container 10 has been described to have one or more particular shapes, sizes, dimensions and the like, a molded article according to the present disclosure may have any suitable size or geometry consistent with the properties described herein.

In one example embodiment, the container 10 may have any suitable mass, such as a mass of about 10 to about 100 grams. In one aspect, a maximum container mass may be selected (i.e., to minimize the amount of material used) to reduce costs associated with making and transporting the container 10, or to reduce the amount of waste generated if the container is discarded. In another aspect, a minimum container mass may be selected to meet various physical performance specifications such as top load strength or permeability. In another embodiment, the mass of the container (or another molded article) may be between about 35 and about 45 grams. In a further embodiment, the mass of the container may be about 40 grams. In yet another embodiment, the mass of the container may be less than about 40 grams, and in still another embodiment, the mass of the container may be greater than about 40 grams.

A molded article, such as container 10 may define an interior volume in order to retain a composition. In one aspect, the interior volume may be selected to hold a particular mass or volume of a given composition. In another aspect the interior volume may be selected to enable the addition of a composition at a later time, such as by a consumer. In still another aspect, the interior volume may be selected to achieve a particular container dimension (e.g., wall thickness) based on a selected mass of the container. In one embodiment, the interior volume of the container 10 may be between about 0.75 liters (25.4 ounces) and about 1.0 liter (33.8 ounces). In a further embodiment, the interior volume of the container 10 may be about 0.77 liters (26 ounces). In yet another embodiment, the interior volume of the container may be about 0.95 liter (32 ounces). In still other embodiments, the interior volume of the container may be greater than about 1.0 liter (33.8 ounces), or less than about 0.75 liters (25.4 ounces).

The container 10 has a particular mass to internal volume ratio. In one aspect, it may be useful to injection mold a preform having a given mass and then form containers having varying internal volumes from the same preform. For example, a preform having a mass of 40 grams may be used to blow mold either a container having an internal volume of 0.75 liters or a container having an internal volume of 1.0 liter. In this example, a mass to internal volume ratio for the 0.75 liter container would be about 0.053 grams per milliliter (g/mL), whereas the 1.0 liter container would have a mass to internal volume ratio of about 0.04 g/mL. In one aspect, it may be useful to vary the mass to internal volume ratio to provide a container with a given set of wall thickness dimensions. In another aspect it may be useful to set a particular mass to internal volume ratio when varying either mass or internal volume in order to scale up or down a given container. For example, it may be useful to double the volume of the 0.75 liter container to 1.5 liters while maintaining a mass to volume ratio of about 0.053. In this example, it would be possible to determine that the mass of a preform should be about 80 grams in order to maintain the mass to internal volume ratio of about 0.053.

The container 10 has a mass to internal volume ratio of about 0.04 g/mL to about 0.06 g/mL. In yet another aspect, a molded article such as container 10 may have a mass to internal volume ratio of about 0.04 g/mL. In still another aspect, a molded article such as container 10 may have a mass to internal volume ratio of about 0.053 g/mL.

The example container 10 may have a given set of overall dimensions (i.e., height, length, depth). The dimensions of the container 10 or a molded article in general, may be selected such that the container occupies a given external volume. For example, the dimensions of the container may be selected to ensure that the container may be stored by a user in a typical cabinet or other storage space. In addition (or as an alternative), the exterior dimensions of the container may be at least partially determined by an interior volume specification. For example, it may be useful to provide a container with an interior volume or capacity of about 0.95 liter (32 ounces). As a result, the specification of a capacity may at least partially affect the exterior dimensions of the container.

In another aspect, it may be useful to provide a container with a given height and length. In such embodiments, the capacity of the container may be varied by varying the depth of the container while maintaining a constant height, length or both height and length. With reference to FIGS. 1 and 2, the x-, y- and z-axes correspond to the length, height and depth, respectively of the container 10. In one embodiment, a container 10 in isolation (i.e., in the absence of trigger sprayer head 50 or another attachment) may have a height of about 10 centimeters (cm) to about 30 cm. In another embodiment, the container may have a height of about 15 cm to about 25 cm. In yet another embodiment, the container may have a height of about 22.6 cm (8.9 inches). With respect to the length of the container along the x-axis, in one embodiment, the length may be about 5 cm to about 17 cm. In another embodiment, the length of the container may be about 8 cm to about 14 cm. In yet another embodiment, the length may be about 10.8 centimeters (4.3 inches). With respect to the depth of the container along the z-axis, in one embodiment, the depth may be about 3 cm to about 12 cm. In another embodiment, the depth may be about 5 cm to about 10 cm. In yet another embodiment the depth may be about 6.5 centimeters (2.6 inches). In still another embodiment, the depth may be about 8.0 centimeters (3.1 inches). In a further embodiment, the dimensions of the container may be independently varied to be greater or less than the values provided herein.

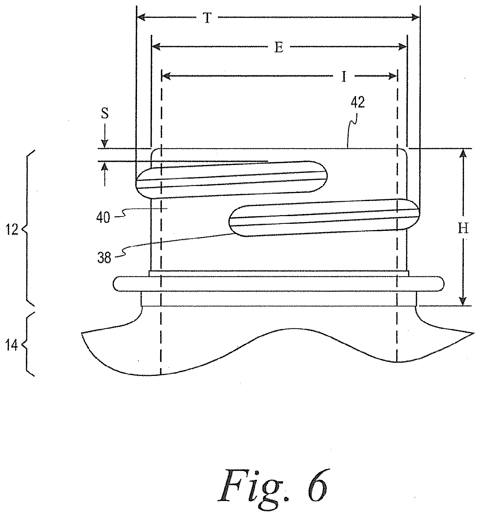

Referring to FIG. 6, another aspect of a container 10 relates to the dimensions of the mouth 12, and more particularly, to the dimensions of the surface threads 38, annular abutment 40 and open upper end 42 with respect to the neck 14. In general, a set of variables may be used to describe the dimensions of the mouth 12. Accordingly, a variable "T" may be used to describe the outside diameter of the surface threads 38, a variable "E" to describe the diameter of the exterior surface of the annular abutment 40 at the base of the threads, and a variable "I" to describe the diameter of the interior surface of the annular abutment 40. Furthermore, a variable "S" may be used to describe the distance from the top of the mouth 12 to the top edge of the first of the surface threads 38 and a variable "H" to describe the height of the mouth 12 relative to the top of the neck 14 at the point where the diameter "T", extends down and intersects with the neck 14.

The dimensions, "T", "E", "I", "S" and "H" (i.e., "mouth dimensions") may be varied to achieve a given fit with a particular peripheral component, enable the addition and removal of various compositions to and from the interior of the container with or without the aid of a filling or dispensing apparatus, or attain a certain physical specification, for example, related to the structural integrity of the mouth 12. In one aspect, a tolerance of the "T" dimension may determine the fit between the mouth 12 and the trigger sprayer head 50 or other peripheral attachment. In another aspect, "E" and "I" may be selected to provide a mouth 12 characterized by a particular thickness dimension or to allow sufficient clearance for filling equipment. In a further aspect, the "S" dimension may determine the orientation or the amount of thread engagement of a peripheral such as the trigger sprayer head 50 with the container 10.

In one embodiment, "H" may vary from about 0.5 cm to about 2 cm. In another embodiment, "H" may be about 1.2 cm. In one embodiment, "T" may vary from about 1 cm to about 4.5 cm. In another embodiment, "T" may be about 2.7 cm. In one embodiment, "E" may vary from about 1.0 cm to about 4 cm. In another embodiment, "E" may be about 2.5 cm. In one embodiment, "I" may vary from about 1 cm to about 4 cm. In another embodiment, "I" may be about 2.2 cm. In one embodiment, "S" may vary from about 0.01 cm to about 0.5 cm. In another embodiment, "S" may be about 0.1 cm. In other embodiments, the mouth dimensions may be suitably and independently varied to be larger or smaller than the values described herein to provide a container or other article with a wider or narrower mouth or with another property as discussed previously. In still other embodiments, a mouth may be omitted altogether.

Another feature of the container 10 is the wall thickness, which may vary in one or more dimensions, such as the height dimension (i.e., along the y-axis). While embodiments of thickness profiles for a container 10 are provided in the EXAMPLES section, in one embodiment, the wall thickness dimensions of a container 10 may vary from about 0.1 millimeters (mm) to about 1 mm. In another embodiment the wall thickness dimensions may vary from about 0.2 mm to about 0.7 mm. In yet another embodiment the wall thickness dimensions may vary from about 0.25 mm to about 0.6 mm.

In some embodiments, the thickness profile of the container 10 may not be uniform in the height dimension. Moreover, while the thickness may be consistent between the front wall 30 and back wall 32 or between the first sidewall 34 and second sidewall 36 of the barrel, the thickness dimension at a given height of the container 10 may vary circumferentially, for example, between the front wall 30 and first side wall 27. By way of illustration, in one embodiment, the front wall 30 and back wall 32 of the barrel 16 may have a thickness dimension of about 0.5 mm at a first height. By comparison, at the first height, the first sidewall 34 and second sidewall 36 of the barrel 16 may have a thickness dimension of about 0.4 mm, which is thinner than the front wall 30 and back wall 32. In one aspect, wall dimensions may be independently varied to be either larger or smaller than the provided dimensions without departing from the scope of the present disclosure. In another aspect, for a bottle without a clearly defined front, back or sidewall, or for a bottle with a continuous sidewall, the wall thickness may be varied circumferentially or axially (e.g., in the height dimension).

In one aspect, it may be useful to provide thinner wall dimensions for a container having a larger interior volume, for example, in order to prepare two or more differently dimensioned containers from the same preform. According to yet another aspect, the specification of one or more wall thickness dimensions may at least partially affect the mass of horizontal sections (i.e., sections cut in the x-z plane) of the container 10. For example, the mass of selected sections of a container 10 having a defined overall mass and height may vary depending on the wall thickness dimensions at a given height. In one aspect, it may be useful to vary the mass of a section to achieve a container or other article with a particular set of traits, such as balance, stability or maneuverability by a user. Accordingly, the mass of a section may be varied without departing from the scope of the present disclosure.

A container or other molded article may be fabricated from any suitable material, such as a plastic, a polymer, a fabric, a non-woven substrate, a cellulosic material, other suitable materials known in the art, or combinations thereof. Additionally, the materials may include combinations of manufactured, natural, and/or recycled or reclaimed materials. In one aspect, the molded article may be include a polymer such as polyethylene (PE), polypropylene (PP), polystyrene (PS), nylon, polyvinylchloride (PVC), polyethylene-terephthalate (PET or PETE), copolymers thereof, as well as other like polymers and copolymers thereof. The one or more polymers or copolymers may be newly synthesized (i.e., virgin) material or partially or entirely prepared from post-consumer or post-industrial recycled material.

A container may be fabricated from PET. The PET, which is a thermoplastic polyester material, may be chemically prepared via a number of synthetic routes. One possible route for the formation of PET may include reacting ethylene glycol ($HOCH_2CH_2OH$) with terephthalic acid ($C_6H_4(CO_2H)_2$) according to the following reaction:

$$n\ C_6H_4(CO_2H)_2 + n\ HOCH_2CH_2OH \rightarrow [(CO)C_6H_4(CO_2CH_2CH_2O)]_n + 2n\ H_2O$$

where n is an integer. Another possible route for the formation of PET may include a two step reaction in which dimethyl terephthalate ($C_6H_4(CO_2CH_3)_2$) and ethylene glycol are reacted in a first step to bis(2-hydroxyethyl) terephthalate ($C_6H_4(CO_2CH_2CH_2OH)_2$), which in turn is reacted with itself in a second step to provide PET:

Step 1: $C_6H_4(CO_2CH_3)_2 + 2\ HOCH_2CH_2OH \rightarrow C_6H_4(CO_2CH_2CH_2OH)_2 + 2\ CH_3OH$

Step 2: $n\ C_6H_4(CO_2CH_2CH_2OH)_2 \rightarrow [(CO)C_6H_4(CO_2CH_2CH_2O)]_n + n\ HOCH_2CH_2OH$

Depending on how the PET is prepared, the resulting material may vary in terms of its molecular weight, intrinsic viscosity, % crystallinity, opacity, elasticity, and so forth. In one example, starting from a temperature above the glass transition ($T_g$) and then rapidly cooling PET below the $T_g$ may result in a generally amorphous and transparent material. By comparison, if the material is instead cooled slowly, the resulting product may be generally more crystalline in structure and translucent or opaque.

In one example, the intrinsic viscosity (IV) of the PET may be varied by adjusting the synthesis procedure to provide longer or shorter polymer chains. In one aspect, IV is related to the molecular mass of a polymer and may be measured by dilute solution viscometry. For example, IV may be calculated using a standard protocol such as ASTM D4603 in which a solution of 0.50 % PET dissolved in a 60:40 mixture of phenol:1,1,2,2-tetrachloroethane is analyzed with a glass capillary viscometer. The flow time of a PET solution may be compared with the flow time for the pure solvent to determine the relative viscosity ($\eta_{rel}$) according to Eq. 1:

$$\eta_{rel} = t_s/t_0 \quad (Eq.\ 1)$$

where $t_0$ is the solvent flow (e.g., 60:40 phenol:1,1,2,2-tetrachloroethane) time and $t_s$ is the solution flow time. In one aspect, Eq. 1 assumes that the flow times are measured in the same glass capillary viscometer and that the density of the solvent is the same (or similar) to that of the polymer solution. Inherent viscosity ($\eta_{inh}$) may be determined from $\eta_{rel}$ with Eq. 2:

$$\eta_{inh} = \ln[\eta_{rel}]/C \quad (Eq.\ 2)$$

where $C$ is the concentration of PET in grams per deciliter. By comparison, IV may be determined in approximation by applying the Billmeyer equation (Eq. 3):

$$IV = (\eta_{rel} - 1 + 3\ln[\eta_{rel}])/4C \quad (Eq.\ 3)$$

In one aspect, while both $\eta_{inh}$ and IV are related to $\eta_{rel}$, these parameters may not be equivalent.

In one aspect, a longer chain length (i.e., higher molecular weight) may provide a polymer with a greater IV, whereas a PET polymer with a shorter chain length (i.e., lower molecular weight) may result in a lower IV.

In general, it is known in the art to provide a PET polymer having an IV of at least about 0.85 dL/g such that the material may have suitable melt strength. In one aspect, melt strength is directly related to the viscosity of the material at low shear rates, such as 1 per second. In another aspect, good melt strength may be required to fabricate containers in a consistent manner and without defects. For example, U. S. Patent No. 8,604,138 (the '138 patent) recites that PET resins with an IV of less than about 0.9 d L/g may be difficult to extrusion blow mold. Accordingly, it may be desirable to use a technique such as solid stating or the incorporation of a branching agent to increase the IV. However, as further recited in the '138 patent, these techniques, and the resulting PET compositions may be prone to issues such as formation of gels and unmelts during the molding process. Moreover, a lower IV may have an effect on other characteristics of the article, such as the permeability to a given composition, top load strength, impact resistance, storage modulus, and the like.

Surprisingly, it has been discovered that a molded article may be prepared with a PET polymer having an IV of less than about 0.8 d L/g without substantially altering the characteristics of the article as compared with, for example, a reference article made from a higher IV polymer. In one aspect, it was anticipated that it may be important to modify features of a molded article formed from PET such as 100% recycled PET. Such features may include the size, shape, thickness dimensions, chemical and material properties, and type and amount of additives combined with the PET. However, the surprising discovery was made that molded articles, such as embodiments of containers as shown in the Figures, may be formed with a PET polymer having an IV of less than about 0.8 dL/g. The molded articles prepared in this way may have suitable properties such as top load strength, storage modulus, color, clarity and the like. Moreover, it was discovered that a molded article may be prepared with 100% post-consumer recycled PET in the absence of any colorants, toners, slip agents or other additives. In an embodiment, the molded article may be a container as disclosed in FIGS. 1 and 2 with an IV of 0.69 dL/g. The PET polymer having an IV of 0.69 dL/g is post-consumer recycled (PCR) PET.

Typically, recycled polymers such as PCR PET may have a lower IV as compared with virgin PET. As a result, prior to the discovery of the present disclosure, it was challenging to provide molded articles including materials such as PCR PET. Prior art molded articles incorporating recycled PET may include virgin PET in order to increase the overall IV. For example, such articles may include at least about 1% virgin PET up to about 99% virgin PET. The virgin PET may be blended with the recycled PET or formed as a separate layer of a multi-layered article. As recited in U.S. Patent No. 8,632,867 (the '867 patent), recycled polymers having an IV from about 0.65 to 0.87 are generally not suitable for use on their own for extrusion blow molding processes. Therefore, the '876 patent discloses that a multilayered molded article may include a comparatively high-IV (e.g., about 0.97 dL/g) polymer "skeleton" and a lower IV (e.g., about 0.76 dL/g) "junk" layer made from recycled PET. In another aspect, it is known that as an alternative (or in addition) to blending or layering, the recycled PET may be processed using various techniques known in the art to improve the IV.

By contrast, the present disclosure provides for a molded article with an IV of 0.69. Accordingly, molded articles according to the present disclosure consist of 100% recycled PET, such as PCR PET. Moreover, it is not necessary that the molded article include virgin PET in either a blend with the PCR PET or as a distinct layer incorporated into a multilayered article. The molded article comprising container 10 is devoid of virgin PET. 100% PCR PET is the only resin used in the fabrication of the molded article (i.e., the article does not include virgin PET, PIR PET, or another polymer such as PP or PS). It should be noted, however, that the molded article may optionally include an additive such as a slip-agent, colorant, plasticizer or toner as described herein.

In an embodiment, the 100% PCR PET has an IV of 0.69 d L/g.

According to one non-limiting theory, it may be possible to provide a molded article as described herein by virtue of the molding process selected to form the article. It is known that orienting or stretching the molecular structure of a polymer in one or more directions may enhance molecular strength (e.g., tensile strength) of the material. In another aspect, the stretching process may minimize elongation properties. Accordingly, stretching of 100% PCR PET having an IV of less than about 0.8 dL/g during the molding process may result in an article with suitable chemical and mechanical properties, such as those described herein. In another aspect, stretching the 100% PCR PET to provide an article with a given set of dimensions such as wall thickness or overall shape may additionally (or alternatively) result in suitable chemical and mechanical properties.

According to another aspect of the present disclosure, a molded article having an IV of 0.69 may have a top load strength of at least about 180 Newtons (N) or about 40 pound-force (lbf). In order to evaluate top loading strength, a molded article such as container 10 may be subjected to an increasing vertical load while the vertical deformation of the container is recorded. The vertical load just before crush ("crushing load" or "peak load") and the corresponding vertical deformation ("crushing deformation") are two parameters that may be used to characterize the top loading strength of the container, with a higher crushing load or lower crushing deformation indicating better top loading strength. In one example, a top load strength of at least about 180 N may be specified for a 0.25 inch maximum deflection at a rate of 1 inch per minute. In another example, a standard testing procedure such as ASTM D2659 may be used.

In general, a higher IV polymer is known to provide improved mechanical properties. However, the surprising discovery was made that a container fabricated from 100% PCR PET, and optionally an additive such as a colorant or slip agent, had a top load strength that was comparable to a reference container fabricated from a blend of virgin PET and PCR PET. A reference container may be substantially the same as the 100% PCR PET container with respect to the dimensions of the container (i.e., height, width, length, wall thickness dimensions, and overall shape). Generally, the only difference between the reference container and the 100% PCR PET container may be that the reference container is prepared from a different polymer composition, such as about 50% virgin PET and about 50% PCR PET (hereinafter, the 50/50 reference container). However, in some embodiments, it may be useful to provide a reference container with alternative or additional variable features depending on the comparison to be made.

In one embodiment, a 100% PCR PET container may have a top load strength of at least about 80% of a top load strength of a 50/50 reference container. In another embodiment, a 100% PCR PET container may have a top load strength of at least about 90% of a top load strength of a 50/50 reference container. In yet another embodiment, a 100% PCR PET container may have a top load strength of at least about 95% of a top load strength of a 50/50 reference container. Accordingly, in one embodiment, a 100% PCR PET container may have a top load strength of at least about 180 N (about 40 lbf). In another embodiment, a 100% PCR PET container may have a top load strength of at least about 200 N (about 45 lbf). In a further embodiment, a 100% PCR PET container may have a top load strength of at least about 220 N (about 50 lb$_f$).

In some embodiments, dynamic mechanical analysis (DMA) may be used to characterize a molded article. DMA may be used to determine the storage modulus in megapascal (MPa) of a given sample by applying a sinusoidal stress to the sample and measuring the resulting strain. In one aspect a sample section of a container may be tested, such as a section having a width of about 6.25 mm and a thickness of about 0.45 mm. DMA may also be used to monitor a sample over time or after exposure to a particular composition or processing step. Generally, high average molecular weight polymers may have a higher storage modulus than lower molecular weight polymers, although the storage modulus may also depend to some degree upon the molecular weight distribution as well as the average molecular weight. In one aspect, a higher molecular weight may correspond with a higher IV. In some embodiments, it may be useful to provide a molded article having a high storage modulus, (e.g., at least about 2000 MPa). In other embodiments it may be useful to provide an article where the storage modulus is relatively constant with respect to time or after exposure to elevated temperatures, for example.

Surprisingly, while a 100% PCR PET container had a IV of 0.69 dL/g, samples taken from the container were determined to have a storage modulus comparable to a 50/50 reference container. In one aspect, a newly molded 100% PCR PET container may be compared with a newly molded 50/50 reference container. In another aspect, a 100% PCR PET container may be maintained at an ambient temperature (i.e., about 23°C) for at least about 4-5 days and compared with a 50/50 reference container maintained at the same conditions. In a further aspect, a 100% PCR PET container may be maintained at an elevated temperature (i.e., about 53°C) for at least about 4-5 days and compared with a 50/50 reference container maintained at the same conditions. In still another aspect, a 100% PCR PET container may be filled with a particular composition and maintained at an ambient or elevated temperature (i.e., about 53°C) for at least about 4-5 days and compared with a 50/50 reference container maintained at the same conditions. With respect to each of the aforementioned conditions, in one embodiment, a 100% PCR PET container may have a storage modulus within at least about 20% of a 50/50 reference container. In another embodiment, a 100% PCR PET container may have a storage modulus within at least about 15% of a 50/50 reference container. In a further embodiment, a 100% PCR PET container may have a storage modulus within at least about 10% of a 50/50 reference container.

In some embodiments, a standardized flat bottom drop test such as ASTM D2463 may be used to characterize a molded article with respect to impact resistance. For example, a molded article such as container 10 may be dropped with an upright orientation from a predetermined height. In one aspect, the container may be filled with a composition or a liquid and sealed with a cap or other peripheral component such as trigger sprayer head 50. The results of the drop test may be quantitative or qualitative. Qualitative observations may include a determination as to whether the container was dented, scuffed, cracked or otherwise damaged, or whether the container leaked after being dropped. In one aspect, a filled and sealed container may be considered to have passed a drop test if the container is not observed to crack or leak.

Surprisingly, embodiments of a molded article according to the present disclosure were able to pass a 4 foot drop test at a rate comparable to a reference article. As described above, a 100% PCR PET container with an IV of 0.69 dL/g may be generally expected to have reduced physical properties, such as a storage modulus or impact resistance as compared with a similar container made with less than 100% PCR PET. However, in certain embodiments, the present disclosure provides for a 100% PCR PET container with an IV of 0.69 dL/g where the container is characterized by a suitable pass rate for a standard 4 foot flat bottom drop test as determined by ASTM D2463. In one embodiment, a 100% PCR PET container may pass a 4 foot drop test at a rate of at least about 80%. In another embodiment, a 100% PCR PET container may pass a 4 foot drop test at a rate of at least about 90%. In a further embodiment, a 100% PCR PET container may pass a 4 foot drop test at a rate of at least about 95%.

In some embodiments, it may be useful to provide a container characterized by a particular color or clarity. In one aspect, it may be useful to provide an opaque, translucent or transparent (i.e., clear) container. For example, an opaque container may be provided if a composition to be placed within the container is sensitive to light. By comparison, a clear container may be provided to enable a user to see or identify a composition disposed within the container. In another aspect, it may be useful to provide a colored or colorless container. For example, a container may be colored to correspond to a particular composition disposed within it. In another example, a colorless container may be useful to enable a user to observer the color of a composition within the container.

Typically, recycled PET may include one or more contaminants that may affect the color or clarity of a container molded therefrom. In some embodiments, PCR PET contaminants may include sand, glass, colorants, paper, other polymers, metals, adhesives, syrups, fillers, and dirt. In various aspects, impurities can be present in PCR PET as one or more of floatable contamination, PVC contamination, metal contamination, other non-melting particles, green PET contamination, colored PET contamination, and the like. By contrast, such impurities are typically substantially absent from virgin PET. While impurities that may be typically present in PCR PET may affect the color or clarity of a container molded therefrom, surprisingly, embodiments of the present disclosure provide a 100% PCR PET container where a color value of the container is substantially similar to that of a 50/50 reference container.

In one aspect a difference in color value may be determined using the CIE *L\*a\*b\** (CIELAB) color space. CIELAB is a color space specified by the International Commission on Illumination and may be used to describe colors visible to the human eye. In one aspect, a value of $\Delta E_{ab}^*$ as defined by the CIE76 formula (see Eq. 4) may be used to determine the relative color difference between two samples.

$$\Delta E_{ab}^* = \sqrt{(L_2^* - L_1^*)^2 + (a_2^* - a_1^*)^2 + (b_2^* - b_1^*)^2} \quad (Eq. 4)$$

As described in Equation 1, $L^*$ is related to lightness, $a^*$ is related to the position of the color between red/magenta and green, and $b^*$ is related to the position of the color between yellow and blue. In one aspect, a value of $\Delta E_{ab}^*$ that is less than about 2.3 may correspond to a just noticeable difference between two colors. However, a minimum value of $\Delta E_{ab}^*$ at which a just noticeable difference may be detected may depend on variables such as the samples being viewed, the lighting or the viewer. Accordingly, in some embodiments, a value of $\Delta E_{ab}^*$ that is less than about 3.5 may not be noticeable by a user.

The value of $\Delta E_{ab}^*$ is less than about 3.5 for a 100% PCR PET container relative to a 50/50 reference container. In another embodiment, a value of $\Delta E_{ab}^*$ is less than about 2.5 for a 100% PCR PET container relative to a 50/50 reference container. In a further embodiment, a value of $\Delta E_{ab}^*$ is less than about 1.5 for a 100% PCR PET container relative to a 50/50 reference container.

In some embodiments, it may be useful to provide a 100% PCR PET container including a suitable colorant or toner. In general, whereas a colorant or toner may not be necessary when virgin PET is used to fabricate a molded article, a colorant or toner may be added to PCR PET to compensate for the effects of impurities as described above. In one aspect, when working with a concentrate, pigment, toner or additive, that amount of additive used may be defined by a "let-down ratio". In one example, a let-down ratio of 1% is equivalent to a ratio of 1 part additive to 99 parts polymer, while a let-down ratio of 4% is equivalent to a ratio of 4 parts additive to 96 parts polymer. Accordingly, in one embodiment, a container or other molded article may include a toner or colorant incorporated at a let-down ratio of between about 0.01% and about 1% relative to the polymer. In another embodiment, a container or other molded article may include a toner or colorant incorporated at a let-down ratio of between about 0.01% and about 0.1% relative to the polymer. In a further embodiment, a container or other molded article may include a toner or colorant incorporated at a let-down ratio of between about 0.01% and about 0.05% relative to the polymer.

In still other embodiments, it may be useful to provide a 100% PCR PET container including a non-colorant or non-toner additive such as a slip agent. In one aspect, a slip-agent may include an additive that provides surface lubrication to the polymer during and after processing. Examples of suitable slip-agents may include molecules that may be classified as amides or fatty acids. One typical slip agent includes oleamide. Other suitable slip-agents may include Eze™ slip agents sold by ColorMatrix. In still other aspects, a colorant or toner may also function as a slip-agent. Accordingly, in one embodiment, a 100% PCR PET container may include between about 0.01% and about 1% by weight of a slip agent. In another embodiment, a 100% PCR PET container may include between about 0.025% and about 0.5% by weight of a slip agent. In a further embodiment, a 100% PCR PET container may include between about 0.05% and about 0.2% by weight of a slip agent.

In some embodiments, a molded article according to the present disclosure may be compatible with one or more compositions. In one aspect, a container may be used to receive, store, or dispense one or more different compositions. In general, compatibility with a particular composition may include that the composition does not substantially react with, dissolve or readily permeate through the walls of the container. In some embodiments, a 100% PCT PET container may be compatible with compositions including, but not limited to, water, ethylene glycol and derivatives thereof, isopropanol, ammonium hydroxide, propylene glycol, acetic acid, lactic acid, surfactants, and other additives, such as colorants, toners, slip agents, and the like.

In general, the physical properties (e.g., IV, molecular weight) of a 100% PCR PET container may be reduced compared with a reference container such as a 50/50 reference container. Therefore, it might be expected that a 100% PCR PET container may be relatively more permeable than the reference container. However, embodiments of a 100% PCR PET container are surprisingly characterized by a permeability that is comparable to a 50/50 reference container. In one example, a container may be filled with a particular composition, sealed with a cap or a peripheral article such as a trigger sprayer head, and stored at an elevated temperature to determine the permeability of the container to the composition. In one aspect, the mass of the container including the composition may be measured at an initial time point and at a final time point to determine the mass loss as a function of time. In one embodiment, the permeability of a 100% PCR PET container is within about 20% of the permeability of a 50/50 reference container. In another embodiment, the permeability of a 100% PCR PET container is within about 10% of the permeability of a 50/50 reference container. In a further embodiment, the permeability of a 100% PCR PET container is within about 5% of the permeability of a 50/50 reference container.

DATA AND EXAMPLES

Numerous non-limiting examples of molded articles have been contemplated to demonstrate the properties discussed herein. More particularly, tests were conducted to demonstrate the impact that the selection of a polymer, additives, the composition within the container, permeability, top load strength, and so forth, have on the physical and chemical characteristics of the molded article. The examples are given solely for the purpose of illustration and are not to be construed as limitations of the present invention, as many variations thereof are possible without departing from the spirit and scope of the invention, which would be recognized by one of ordinary skill in the art.

With reference to FIGS. 1, 2, and 5, and Table 1, two different 100% PCR PET containers were prepared according to the present disclosure. Each container was prepared from a 40 g 100% PCR PET preform prepared by an injection molding process. The preform was blow molded to provide either a 26 oz container or a 32 oz container according to the specifications shown in Table 1.

**Table 1:**

| Parameter | 26 oz container | | | 32 oz container | | |
|---|---|---|---|---|---|---|
| | Specification | Min | Max | Specification | Min | Max |
| mass (g) | 40.0 | 39.6 | 40.4 | 40.0 | 39.6 | 40.4 |
| fill mass (g) | 814 | 804 | 824 | 985 | 975 | 995 |
| height (cm) | 22.59 | 22.49 | 22.69 | 22.59 | 22.49 | 22.69 |
| length (cm) | 10.84 | 10.69 | 10.99 | 10.84 | 10.69 | 10.99 |
| depth (cm) | 6.51 | 6.43 | 6.59 | 8.01 | 7.93 | 8.09 |
| Internal volume ($cm^3$) | 769 | n. a. | n. a. | 946 | n. a. | n. a. |
| H (cm) | 1.17 | 1.14 | 1.20 | 1.17 | 1.14 | 1.20 |
| T (cm) | 2.73 | 2.71 | 2.75 | 2.73 | 2.71 | 2.75 |
| E (cm) | 2.50 | 2.47 | 2.52 | 2.50 | 2.47 | 2.52 |
| I (cm) | 2.23 | 2.21 | 2.25 | 2.23 | 2.21 | 2.25 |
| S (cm) | 0.12 | 0.08 | 0.15 | 0.12 | 0.08 | 0.15 |

In one aspect, each of the 26 oz and 32 oz containers had substantially the same dimensions with differences including the interior volume and the depth of the container. Each of the parameters in Table 1 is provided with a dimension shown in parenthesis and a range of possible values between a maximum value and a minimum value. The indication n. a. "stands for not applicable." Whereas the container dimensions are provided as shown in Table 1, the dimension for the mouths of the containers are shown in Table 2.

**Table 2:**

| Parameter | Dimension (cm) | Maximum (cm) | Minimum (cm) |
|---|---|---|---|
| H | 1.173 | 1.204 | 1.143 |
| T | 2.731 | 2.748 | 2.713 |
| E | 2.499 | 2.525 | 2.474 |
| I | 2.230 | 2.250 | 2.210 |
| S | 0.117 | 0.155 | 0.079 |

Each of the mouth parameters in Table 2 is provided with a dimension in centimeters (cm) and a range of possible values between a maximum value and a minimum value. For example, "H" may have a dimension of 1.173 cm, but may vary between about 1.143 cm and about 1.204 cm.

Wall thickness dimensions for the 26 oz container are shown in Table 3.

**Table 3:**

| Height (cm) | Wall Location | Dimension (mm) | Minimum (mm) |
|---|---|---|---|
| 17.78 | front/back | 0.51 | 0.36 |
| 12.70 | front/back | 0.38 | 0.36 |
| 7.62 | front/back | 0.36 | 0.36 |
| 1.91 | front/back | 0.38 | 0.30 |
| 1.91 | side/side | 0.46 | 0.43 |
| 0.64 | front/back | 0.41 | 0.30 |
| 0.64 | side/side | 0.58 | 0.51 |

As shown in Table 3, the thickness profile of the 26 oz container may not be uniform in the height dimension. Moreover, while the thickness may be consistent between the front and back walls or between the sidewalls of the barrel, the thickness dimension at a given height of the 26 oz container may vary, for example, between the front wall and sidewalls. In particular, for the 26 oz container, the front and back walls of the barrel have a thickness dimension of about 0.46 millimeters (mm) at a height of about 1.91 cm. By contrast, at the same height (1.91 cm), the sidewalls of the barrel have a thickness dimension of about 0.38 mm, which is about 0.08 mm thinner than the front and back walls.

With continued reference to Table 3, it may be seen that the thickness dimensions of the example 26 oz container may vary from about 0.36 mm to about 0.58 mm at various heights and locations. Minimum dimension specification may also be provided. For example, a thickness dimension of 0.41 mm at a height of 0.64 cm may have a minimum thickness of about 0.30 mm. By comparison, a thickness dimension of 0.36 mm at a height of 7.62 cm may also be the minimum thickness. It should be noted that while one set of example wall thickness dimensions is provided in Table 3, in other embodiments wall dimensions may be independently varied to be either larger or smaller than the provided dimensions without departing from the scope of the present disclosure.

Table 4 provides wall thickness dimensions for the 32 oz container.

**Table 4:**

| Height (cm) | Location | Dimension (mm) | Minimum (mm) |
|---|---|---|---|
| 17.78 | front/back | 0.36 | 0.25 |
| 12.70 | front/back | 0.36 | 0.30 |
| 7.62 | front/back | 0.43 | 0.36 |
| 1.91 | front/back | 0.51 | 0.36 |
| 1.91 | side/side | 0.33 | 0.25 |
| 0.64 | front/back | 0.43 | 0.30 |
| 0.64 | side/side | 0.30 | 0.25 |

The wall thickness dimensions provided in Table 4 are generally smaller than the corresponding dimensions provided in Table 3. In one aspect, the thinner wall dimensions correspond to the 32 oz container having a larger interior volume.

The mass of horizontal sections (i.e., sections cut in the x-z plane) of the 26 oz and 32 oz containers are provided in Table 5.

**Table 5:**

| Section (mm) | mass (g) | |
|---|---|---|
| | 26 oz container | 32 oz container |
| <60 | 7.5 | 7.4 |
| 60-120 | 9.9 | 9.7 |
| 120-160 | 6.7 | 7.7 |
| 160-205 | 7.4 | 7.3 |
| >205 | 8.5 | 7.9 |

For the 26 oz container example, a first section between a height of 60 mm and about 120 mm has a mass of about 9.9 g, whereas a second section taken between a height of about 120 mm and about 160 mm has a mass of about 6.7 g.

By comparison, for the 32 oz container, the first section has a mass of about 9.7 g, whereas the second section has a mass of about 7.7 g.

Table 6 shows CIELAB color space data including calculated values for $\Delta E_{ab}^*$ as defined by the CIE76 formula (see Eq. 4).

**Table 6:**

| Sample | IV (dL/g) | LDR (%) | $\Delta E_{ab}^*$ | L* | a* | b* |
|---|---|---|---|---|---|---|
| 50/50 reference container | > 0.80 | n. a. | - | 94.64 | -0.15 | 1.62 |
| 100% PCR PET - 1 | 0.69 | n. a. | 1.72 | 93.36 | -0.31 | 2.73 |
| 100% PCR PET - 2 | 0.69 | n. a. | 2.06 | 93.21 | -0.37 | 3.07 |
| 100% PCR PET - 3 | 0.69 | 0.03 | 2.44 | 92.30 | -0.45 | 2.25 |
| 100% PCR PET - 4 | 0.69 | 0.04 | 2.58 | 92.13 | -0.55 | 2.02 |
| 100% PCR PET - 5 | 0.69 | 0.05 | 3.03 | 91.69 | -0.56 | 2.17 |
| 100% PCR PET - 6 | 0.75 | n. a. | 3.12 | 91.95 | -0.18 | 3.20 |

Various samples including a 50/50 reference container and six additional containers fabricated from 100% PCR PET were tested. Variables tested included both IV and let-down ratio (LDR). Values for L*, a* and b* were acquired from container samples having a thickness dimension of about 0.45 mm $\pm$ 0.05 mm. Reflected color was measured using a spectrophotometer, with measurements acquired in the visible region (about 400nm to about 700 nm) with $\Delta E_{ab}^*$ calculated based on CIE standard illuminant D65. In one aspect, increasing the let-down ratio for a toner additive resulted in an increase in $\Delta E_{ab}^*$ as did using a PCR PET material with a different IV. Sample container 6 is not an embodiment of the claimed invention.

Table 7 shows data collected from DMA testing for various 50 % virgin PET/50% PCR PET or 100% PCR PET containers.

**Table 7:**

| Reference Sample | PET Type | Temp (°C) | Fill Composition | Storage Modulus (MPa) |
|---|---|---|---|---|
| A | 100% PCR | 23 | empty | 2341 |
| B | 50% virgin/50% PCR | 23 | empty | 2405 |
| C | 50% virgin/50% PCR | 23 | solution 1 | 2205 |
| D | 50% virgin/50% PCR | 23 | solution 2 | 2264 |
| E | 50% virgin/50% PCR | 23 | solution 3 | 2271 |
| - | 100% PCR | 23 | solution 1 | 2327 |
| - | 100% PCR | 23 | solution 2 | 2229 |
| - | 100% PCR | 23 | solution 3 | 2529 |
| - | 100% PCR | 53 | empty | 2850 |
| - | 100% PCR | 53 | solution 1 | 2574 |
| - | 100% PCR | 53 | solution 2 | 2502 |
| - | 100% PCR | 53 | solution 3 | 2903 |

Data was collected for containers that were either empty or filled with one of three compositions (solution 1, solution 2, or solution 3). The containers were maintained at ambient temperature (about 23°C) or at an elevated temperature (about 53°C) for 46 days, after which time samples were collected for DMA testing. Representative samples had a width of about 6.25 cm and a thickness of about 0.45 mm. 100% PCR PET samples were compared with control samples to determine the % change or difference in storage modulus (Table 8).

**Table 8:**

| Reference Sample | Temp (°C) | 100% PCR PET Container (% difference) | | |
| :---: | :---: | :---: | :---: | :---: |
| | | Solution 1 | Solution 2 | Solution 3 |
| A | 23 | -0.6 | -4.8 | 8.0 |
| B | 23 | -3.2 | -7.3 | 5.2 |
| C | 23 | 5.5 | | |
| D | 23 | | -1.5 | |
| E | 23 | | | 11.4 |
| A | 53 | 10.0 | 6.9 | 24.0 |
| B | 53 | 7.0 | 4.0 | 20.7 |
| C | 53 | 16.7 | | |
| D | 53 | | 10.5 | |
| E | 53 | | | 27.8 |

In general, samples maintained at ambient temperature experienced a smaller change in storage modulus as compared with samples maintained at an elevated temperature. In one aspect, 46 days at 53°C approximates one year at ambient temperature. Accordingly, the data may be used to extrapolate the chemical compatibility of the containers after one year. Peak load strength was also determined in a similar experiment as shown in Tables 9 and 10.

**Table 9:**

| Reference Sample | PET Type | Temp (°C) | Fill Composition | Peak Load (lb$_f$) |
| :---: | :---: | :---: | :---: | :---: |
| F | 100% PCR | 23 | empty | 65.86 |
| G | virgin + additive | 23 | empty | 59.86 |
| H | Virgin | 23 | empty | 59.61 |
| I | Virgin | 23 | solution 1 | 64.25 |
| J | Virgin | 23 | solution 2 | 65.51 |
| K | Virgin | 23 | solution 3 | 56.08 |
| | 100% PCR | 23 | solution 1 | 69.97 |
| | 100% PCR | 23 | solution 2 | 71.96 |
| | 100% PCR | 23 | solution 3 | 71.94 |
| L | 100% PCR | 53 | empty | 66.95 |
| M | virgin + additive | 53 | empty | 64.91 |
| N | Virgin | 53 | solution 1 | 64.25 |
| O | Virgin | 53 | solution 2 | 65.51 |
| P | Virgin | 53 | solution 3 | 56.08 |
| - | 100% PCR | 53 | solution 1 | 64.58 |
| - | 100% PCR | 53 | solution 2 | 65.50 |
| - | 100% PCR | 53 | solution 3 | 73.57 |

**Table 10:**

| Reference Sample | Temp (°C) | 100% PCR PET Container (% difference) | | |
| :---: | :---: | :---: | :---: | :---: |
| | | Solution 1 | Solution 2 | Solution 3 |
| F | 23 | 6.24 | 9.26 | 9.23 |
| G | 23 | 16.89 | 20.21 | 20.18 |
| H | 23 | 17.38 | 20.72 | 20.68 |
| I | 23 | 8.90 | | |

(continued)

| Reference Sample | Temp (°C) | 100% PCR PET Container (% difference) | | |
|---|---|---|---|---|
| | | Solution 1 | Solution 2 | Solution 3 |
| I | 23 | | 9.85 | |
| K | 23 | | | 28.28 |
| F | 53 | -1.94 | -.055 | 11.71 |
| L | 53 | 3.54 | 2.17 | 9.89 |
| M | 53 | 0.51 | 0.91 | 13.34 |
| N | 53 | 0.51 | | |
| O | 53 | | -0.02 | |
| P | 53 | | | 31.19 |

In particular, data was collected for containers that were either empty or filled with one of three compositions (solution 1, solution 2, or solution 3). The containers were maintained at ambient temperature (about 23°C) or at an elevated temperature (about 53°C) for 46 days, after which time samples were collected in order to determine top load strength. Peak load was calculated and 100% PCR PET samples were compared with control samples to determine the % change or difference in peak load. In contrast to the storage modulus, no clear trend was observed for samples maintained at ambient temperature as compared with samples maintained at an elevated temperature.

In another experiment, data was collected for containers filled with one of three compositions (solution 1, solution 2, or solution 3). The containers were maintained at ambient temperature (about 23°C) or at an elevated temperature (about 104°C) for up to 360 days, with each sample weighed at various intervals. A linear fit was applied to each data set in order to determine the mass loss rate in terms of grams of material lost per day. Mass loss data is provided in Table 11.

**Table 11:**

| | 23°C | | | 104°C | | |
|---|---|---|---|---|---|---|
| Days | Solution 1 | Solution 2 | Solution 3 | Solution 1 | Solution 2 | Solution 3 |
| 30 | 0.862 | 0.851 | 0.848 | 3.225 | 3.172 | 3.150 |
| 60 | 1.787 | 1.751 | 1.732 | 6.562 | 6.417 | 6.367 |
| 91 | 2.669 | 2.600 | 2.568 | 9.773 | 9.568 | 9.515 |
| 182 | 4.945 | 4.802 | 4.759 | 19.455 | 18.992 | 18.809 |
| 270 | 7.166 | 6.944 | 6.888 | | | |
| 360 | 9.118 | 8.857 | 8.748 | | | |
| Mass Loss Rate (g/day) | 0.026 | 0.025 | 0.025 | 0.107 | 0.105 | 0.104 |

In one aspect, the overall mass loss rate was comparable between tested solutions at a given temperature. Moreover, the samples maintained at a higher temperature were observed to have an increased mass loss rate.

The described features, structures, or characteristics of the invention may be combined in any suitable manner in one or more embodiments. In the following description, numerous specific details are recited to provide a thorough understanding of embodiments of the system. One skilled in the relevant art will recognize, however, that the system and method may both be practiced without one or more of the specific details, or with other methods, components, materials, and so forth. In other instances, well-known structures, materials, or operations are not shown or described in detail to avoid obscuring aspects of the invention. Thus, appearances of the phrases "in one embodiment," "in an embodiment," and similar language throughout this specification may, but do not necessarily, all refer to the same embodiment.

**Claims**

1. A molded article including post-consumer recycled material, comprising:

a container (10) including:

a base (18);
a sidewall (34, 36) connected to the base (18) and extending therefrom; and
an opening (12),

wherein the container is (10) devoid of virgin polyethylene terephthalate
**characterised in that** the container (10) consists of (i) 100% post-consumer recycled polyethylene terephthalate having an intrinsic viscosity of 0.69 deciliters per gram, and optionally (ii) an additive selected from a toner, a colorant and a slip agent,
wherein the container (10) has a mass to internal volume ratio of between 0.04 grams per cubic centimeter and 0.06 grams per cubic centimeter, and
wherein a value of $\Delta E^*ab$ is less than 3.5 for the container (10) with respect to a reference container having the same dimensions as the container (10), the reference container differing from the container (10) only in polymer composition, wherein said polymer composition consists of 50% virgin polyethylene terephthalate and 50% post-consumer recycled polyethylene terephthalate.

2. The molded article of claim 1, wherein an L* of the container (10) is 90 to 96, an a* of the container (10) is -1.0 to 0.0 and a b* of the container (10) is 1.0 to 4.0 according to the CIELAB color space.

3. The molded article of claim 1, wherein a total mass of the container (10) is less than 45 grams.

4. The molded article of claim 1, wherein the container (10) has an internal volume of at least 0.75 cubic centimeters.

5. The molded article of claim 1, wherein the sidewall (34, 36) of the container has a maximum thickness of less than 0.6 millimeters.

6. The molded article of claim 1, wherein the container (10) comprises between 0.05% and 0.2% by weight of a slip agent.

7. The molded article of claim 1, wherein the container (10) comprises a toner incorporated at a let-down ratio of between 0.01% and 0.05% relative to the polymer.

8. The molded article of claim 1, wherein the opening (12) of the container (10) is threaded for reversible coupling to a trigger sprayer head (50).

9. A molded article according to claim 1 comprising a blow-molded container prepared from an injection molded preform.

10. The blow-molded container of claim 9, wherein a top load strength of the container is at least 175 Newtons.

**Patentansprüche**

1. Ein Formteil, das gebrauchtes rezykliertes Material umfasst, beinhaltend:

einen Behälter (10), umfassend:

eine Basis (18);
eine mit der Basis (18) verbundene und sich von dieser erstreckende Seitenwand (34, 36); und
eine Öffnung (12),

wobei der Behälter (10) frei von frisch hergestelltem Polyethylenterephthalat ist,
**dadurch gekennzeichnet, dass** der Behälter (10) aus (i) 100 % verbrauchtem rezykliertem Polyethylenterephthalat mit einer Grenzviskosität von 0,69 Deziliter pro Gramm und optional (ii) einem Zusatzmittel, ausgewählt aus einem Toner, einem Farbstoff und einem Gleitmittel, besteht,
wobei der Behälter (10) ein Masse-Innenvolumen-Verhältnis von zwischen 0,04 Gramm pro Kubikzentimeter und 0,06 Gramm pro Kubikzentimeter aufweist, und
wobei ein Wert von $\Delta E^*ab$ hinsichtlich eines Referenzbehälters mit denselben Abmessungen wie der Behälter (10) für den Behälter (10) weniger als 3,5 beträgt, wobei sich der Referenzbehälter vom Behälter (10) nur in der Polymerzusammensetzung unterscheidet, wobei die Polymerzusammensetzung aus 50 % frisch hergestelltem Polyethylenterephthalat und 50 % verbrauchtem rezykliertem Polyethylenterephthalat besteht.

2. Formteil gemäß Anspruch 1, wobei gemäß dem CIELAB-Farbraum ein L* des Behälters (10) 90 bis 96 beträgt, ein a* des Behälters (10) -1,0 bis 0,0 beträgt und ein b* des Behälters (10) 1,0 bis 4,0 beträgt.

3. Formteil gemäß Anspruch 1, wobei eine Gesamtmasse des Behälters (10) weniger als 45 Gramm beträgt.

4. Formteil gemäß Anspruch 1, wobei der Behälter (10) ein Innenvolumen von wenigstens 0,75 Kubikzentimeter aufweist.

5. Formteil gemäß Anspruch 1, wobei die Seitenwand (34, 36) des Behälters eine maximale Dicke von weniger als 0,6 Millimeter aufweist.

6. Formteil gemäß Anspruch 1, wobei der Behälter (10) zu zwischen 0,05 Gew.-% und 0,2 Gew.-% ein Gleitmittel beinhaltet.

7. Formteil gemäß Anspruch 1, wobei der Behälter (10) einen Toner beinhaltet, der bezogen auf das Polymer bei einem Einlassverhältnis von zwischen 0,01 % und 0,05 % inkorporiert wird.

8. Formteil gemäß Anspruch 1, wobei die Öffnung (12) des Behälters (10) zur reversiblen Kopplung an einen Auslösesprüherkopf (50) mit einem Gewinde versehen ist.

9. Formteil gemäß Anspruch 1, beinhaltend einen blasgeformten Behälter, der aus einem spritzgegossenen Vorformling hergestellt ist.

10. Blasgeformter Behälter gemäß Anspruch 9, wobei eine Druckfestigkeit des Behälters wenigstens 175 Newton beträgt.

**Revendications**

1. Un article moulé incluant un matériau recyclé après consommation, comprenant :

    un contenant (10) incluant :

        une base (18) ;
        une paroi latérale (34, 36) raccordée à la base (18) et s'étendant à partir de celle-ci ; et
        une ouverture (12),

    dans lequel le contenant (10) est dépourvu de poly(téréphtalate d'éthylène) vierge
    **caractérisé en ce que** le contenant (10) consiste en (i) 100 % de poly(téréphtalate d'éthylène) recyclé après consommation ayant une viscosité intrinsèque de 0,69 décilitre par gramme, et facultativement (ii) un additif sélectionné parmi un toner, un colorant et un agent glissant,
    dans lequel le contenant (10) a un rapport de la masse au volume interne compris entre 0,04 gramme par centimètre cube et 0,06 gramme par centimètre cube, et
    dans lequel une valeur de $\Delta E^*_{ab}$ est inférieure à 3,5 pour le contenant (10) par rapport à un contenant de référence ayant les mêmes dimensions que le contenant (10), le contenant de référence étant différent du contenant (10) uniquement par sa composition polymère, ladite composition polymère consistant en 50 % de poly(téréphtalate d'éthylène) vierge et 50 % de poly(téréphtalate d'éthylène) recyclé après consommation.

2. L'article moulé de la revendication 1, dans lequel un L* du contenant (10) va de 90 à 96, un a* du contenant (10) va de -1,0 à 0,0 et un a b* du contenant (10) va de 1,0 à 4,0 selon l'espace de couleurs CIELAB.

3. L'article moulé de la revendication 1, dans lequel une masse totale du contenant (10) est inférieure à 45 grammes.

4. L'article moulé de la revendication 1, dans lequel le contenant (10) a un volume interne d'au moins 0,75 centimètre cube.

**5.** L'article moulé de la revendication 1, dans lequel la paroi latérale (34, 36) du contenant a une épaisseur maximale inférieure à 0,6 millimètre.

**6.** L'article moulé de la revendication 1, dans lequel le contenant (10) comprend entre 0,05 % et 0,2 % en poids d'un agent glissant.

**7.** L'article moulé de la revendication 1, dans lequel le contenant (10) comprend un toner incorporé selon un rapport de dilution compris entre 0,01 % et 0,05 % relativement au polymère.

**8.** L'article moulé de la revendication 1, dans lequel l'ouverture (12) du contenant (10) est filetée pour un accouplement réversible à une tête de pulvérisateur à gâchette (50).

**9.** Un article moulé selon la revendication 1 comprenant un contenant moulé par soufflage préparé à partir d'une préforme moulée par injection.

**10.** Le contenant moulé par soufflage de la revendication 9, dans lequel une résistance à la compression du contenant est d'au moins 175 newtons.

*Fig. 1*

EP 3 131 822 B2

*Fig. 2*

*Fig. 3*

*Fig. 4*

*Fig. 5*

*Fig. 6*

**EP 3 131 822 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2012258398 A1
- WO 2012102778 A1
- US 8604138 B
- US 8632867 B